# EUROPEAN PATENT APPLICATION

(11) **EP 4 738 028 A1**
(43) Date of publication of application: **06.05.2026**
(21) Application number: 24836205.5
(22) Date of filing: 04.06.2024
(51) Int. Cl.: G04B 37/08, G06F 1/16, H05K 5/06, G04G 21/04, G04B 9/02

(54) **WATERPROOFING STRUCTURE AND WEARABLE ELECTRONIC DEVICE INCLUDING SAME**

(30) Priority: 04.07.2023 KR 20230086685; 01.08.2023 KR 20230100483
(71) Applicant: Samsung Electronics Co., Ltd., Suwon-si, Gyeonggi-do 16677 (KR)
(72) Inventor: LEE, Ohhee, Suwon-si, Gyeonggi-do 16677 (KR); KIM, Sanghyeon, Suwon-si, Gyeonggi-do 16677 (KR); PARK, Jaehyeon, Suwon-si, Gyeonggi-do 16677 (KR); LEE, Halim, Suwon-si, Gyeonggi-do 16677 (KR); LIM, Sunhwa, Suwon-si, Gyeonggi-do 16677 (KR); JOO, Chandon, Suwon-si, Gyeonggi-do 16677 (KR); CHOI, Jongchul, Suwon-si, Gyeonggi-do 16677 (KR)
(74) Representative: Nederlandsch Octrooibureau
(86) International application number: PCT/KR2024/007635
(87) International publication number: WO 2025/009756

(57) **Abstract**

According to an embodiment disclosed herein, a wearable electronic device may comprise: a housing; a display disposed in the housing; a front plate covering the display; and a sealing member that is disposed between the housing and the front plate, and includes a first core portion, a second core portion, and an elastic portion surrounding the first core portion and the second core portion, wherein the elastic portion is configured to be at least partially elastically deformable. At least a portion of the first core portion may overlap at least a portion of the second core portion with respect to a first direction from the inner surface of the sealing member toward the outer surface of the sealing member. Various other embodiments may also be possible.

## Description

### [Technical Field]

Various embodiments of the disclosure relate to a wearable electronic device, e.g., a waterproofing structure and a wearable electronic device including the same.

### [Background Art]

Generally, the electronic device means a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. The electronic devices may output stored information as voices or images. As electronic devices are highly integrated and high-speed, high-volume wireless communication becomes commonplace, mobile communication terminals are recently being equipped with various functions.

For example, an electronic device comes with the integrated functionality, including an entertainment function, such as playing video games, a multimedia function, such as replaying music/videos, a communication and security function for mobile banking, and a scheduling or e-wallet function.

Further, recent electronic devices have also proposed various types of wearable electronic devices that may be mounted on the body, such as glasses or watches.

While integrating various functions into such electronic devices, thinning, downsizing, and/or simplification of appearance may be required to increase aesthetic appeal and provide convenience to users.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, a wearable electronic device may include a housing, a display, a front plate, or a sealing member. The display may be disposed in the housing. The front plate may cover the display. The sealing member may be disposed between the housing and the front plate. The sealing member may include a first core portion, a second core portion, or an elastic portion. The elastic portion may surround the first core portion and the second core portion. The elastic portion may be configured to be at least partially elastically deformable. At least a portion of the first core portion may overlap at least a portion of the second core portion in a first direction from an inner surface of the sealing member toward an outer surface of the sealing member.

According to an embodiment of the disclosure, a wearable electronic device may include a housing, a display, a front plate, a sealing member, or an adhesive member. The display may be disposed in the housing. The front plate may cover the display. The sealing member may be disposed between the housing and the front plate. The sealing member may include at least one core portion or an elastic portion. The elastic portion may surround the at least one core portion. The elastic portion may be configured to be at least partially elastically deformable. The adhesive member may be configured to adhere the housing and the front plate. The adhesive member may overlap the sealing member in a direction from the display toward the front plate.

According to an embodiment of the disclosure, a wearable electronic device may include a housing, a display, a front plate, or a sealing member. The display may be disposed within the housing. The front plate may cover the display. The sealing member may be disposed between the housing and the front plate. The sealing member may include a first core portion, a second core portion, or an elastic portion. The elastic portion may surround the first core portion and the second core portion. The elastic portion may be configured to be at least partially elastically deformable. The sealing member may include one surface or another surface. The another surface of the sealing member may face a direction opposite to the one surface of the sealing member. At least a portion of the first core portion may overlap at least a portion of the second core portion in a direction from the one surface of the sealing member toward the another surface of the sealing member.

### [Brief Description of the Drawings]

FIG. 1 is a block diagram illustrating an electronic device in a network environment according to an embodiment;
FIG. 2 is a front perspective view illustrating a wearable electronic device according to an embodiment of the disclosure;
FIG. 3 is a rear perspective view illustrating the wearable electronic device of FIG. 2 according to an embodiment of the disclosure;
FIG. 4 is an exploded perspective view illustrating the wearable electronic device of FIG. 2 according to an embodiment of the disclosure;
FIG. 5 is an exploded perspective view illustrating a wearable electronic device according to an embodiment of the disclosure;
FIG. 6 is a plan view illustrating a sealing member according to an embodiment of the disclosure;
FIG. 7A is a cross-sectional view taken along line A-A' of FIG. 6 according to an embodiment of the disclosure;
FIG. 7B is a cross-sectional view taken along line B-B' of FIG. 6 according to an embodiment of the disclosure;
FIG. 7C is a cross-sectional view taken along line C-C' of FIG. 6 according to an embodiment of the disclosure;
FIG. 8 is a cross-sectional view taken along line A-A' of FIG. 6 according to an embodiment of the disclosure;
FIG. 9 is an exploded perspective view illustrating a side bezel structure and a sealing member according to an embodiment of the disclosure;
FIG. 10 is a cross-sectional view illustrating a state in which a sealing member is inserted into a groove of the side bezel structure according to an embodiment of the disclosure;
FIG. 11 is an exploded perspective view illustrating a side bezel structure and a cover window according to an embodiment of the disclosure;
FIG. 12 is a cross-sectional view illustrating a wearable electronic device according to an embodiment of the disclosure;
FIG. 13 is a plan view illustrating a plurality of core portions according to an embodiment of the disclosure;
FIG. 14 is a perspective view illustrating a state in which a plurality of core portions are aligned by a bridge member according to an embodiment of the disclosure;
FIG. 15 is a perspective view illustrating a state in which an elastic portion is injected into a plurality of core portions according to an embodiment of the disclosure;
FIG. 16 is a plan view illustrating a sealing member according to an embodiment of the disclosure;
FIG. 17 is a plan view illustrating a sealing member according to an embodiment of the disclosure;
FIG. 18 is a plan view illustrating a sealing member according to an embodiment of the disclosure;
FIG. 19 is a plan view illustrating a sealing member according to an embodiment of the disclosure; and
FIG. 20 is a plan view illustrating a sealing member according to an embodiment of the disclosure.

### [Mode for Carrying out the Invention]

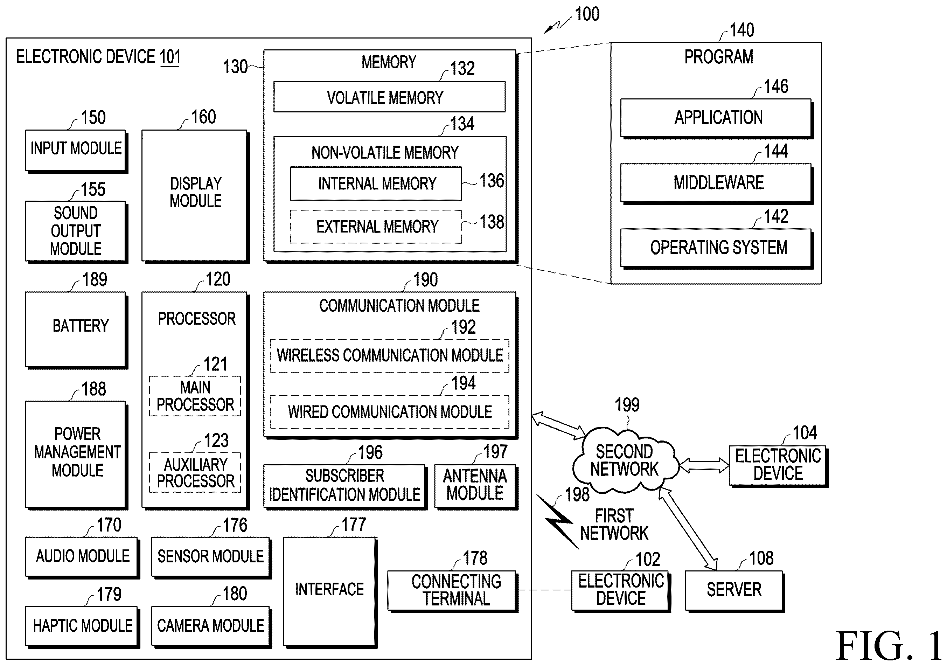

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the sub processor 123, the sub processor 123 may be configured to use lower power than the main processor 121 or to be specified for a designated function. The sub processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

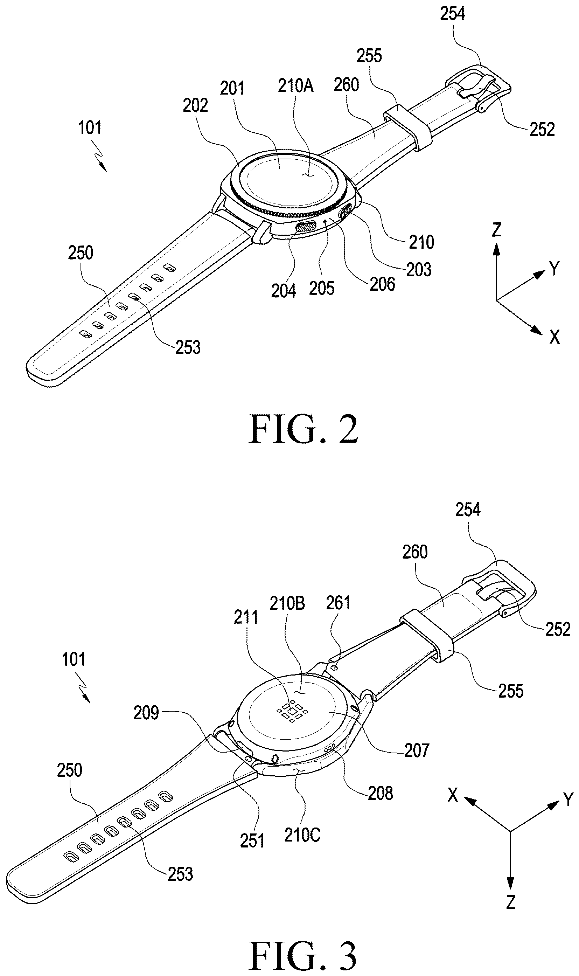

FIG. 2 is a front perspective view illustrating a wearable electronic device according to an embodiment of the disclosure.

FIG. 3 is a rear perspective view illustrating the wearable electronic device of FIG. 2 according to an embodiment of the disclosure.

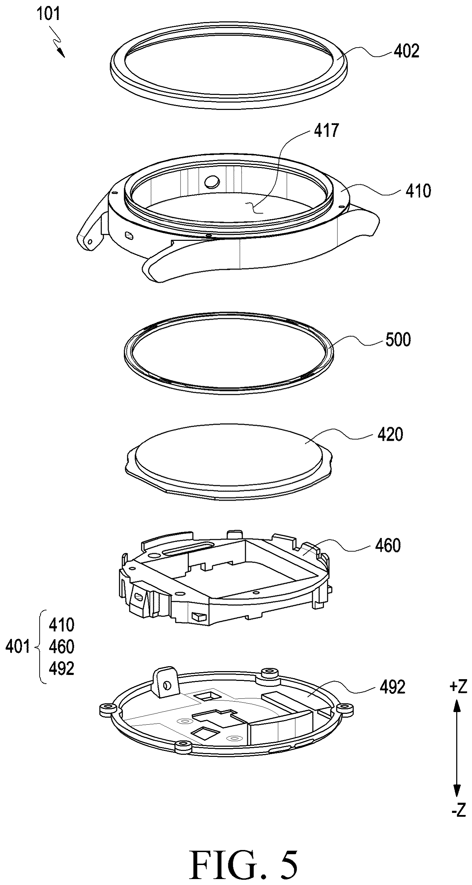

The embodiments of FIGS. 2 and 3 may be combined with the embodiment of FIG. 1 or the embodiments of FIGS. 5 to 20.

In the following detailed description, in the orthogonal coordinate system of FIGS. 2 to 4, 'X-axis direction' may be understood as the width direction of the electronic device 101 or the housing 210, 'Y-axis direction' may be understood as the length direction of the electronic device 101 or the housing 210, and 'Z-axis direction' may be understood as the thickness direction of the electronic device 101 or the housing 210. In an embodiment, the direction in which the front surface (e.g., the first surface 210A of FIG. 2) of the electronic device 101 or the housing 210 faces may be defined as a '+Z direction', and the direction in which the rear surface (e.g., the second surface 210B of FIG. 3) of the electronic device 101 or the housing 210 faces may be defined as a '-Z direction'.

Referring to FIGS. 2 and 3, a wearable electronic device 101 may include a housing 210 or wearing members 250 and 260. The housing 210 may include a first surface (or front surface) 210A, a second surface (or rear surface) 210B, or a side surface 210C. The side surface 210C may surround a space between the first surface 210A and the second surface 210B.

According to an embodiment, the wearing members 250 and 260 may be connected to at least a portion of the housing 210 and be configured to detachably fasten the electronic device 101 to the user's body portion (e.g., wrist or ankle). For example, the wearable electronic device 101 may be of a wrist watch type. In an embodiment, the housing 210 may denote a structure forming the first surface 210A of FIG. 2, the second surface 210B of FIG. 3, and some of the side surfaces 210C. According to an embodiment, at least part of the first surface 210A may have a substantially transparent front plate 201 (e.g., a glass plate or polymer plate including various coat layers). The second surface 210B may be formed by a rear plate 207 that is substantially opaque. According to an embodiment, when the electronic device 101 includes a sensor module 211 disposed on the second surface 210B, the rear plate 207 may at least partially include a transparent area. The rear plate 207 may be formed of, e.g., laminated or colored glass, ceramic, polymer, metal (e.g., aluminum, stainless steel (STS), or magnesium), or a combination of at least two thereof. The side surface 210C may be formed by a side bezel structure (or a "side member") 206 that couples to the front plate 201 and the rear plate 207 and includes a metal and/or polymer. According to an embodiment, the rear plate 207 and the side bezel structure 206 may be integrally formed together and include the same material (e.g., a metal, such as aluminum). The wearing members 250 and 260 may be formed of various materials in various shapes. A uni-body structure or multiple unit links which is flexible may be formed of fabric, leather, rubber, urethane, metal, ceramic, or a combination of at least two thereof.

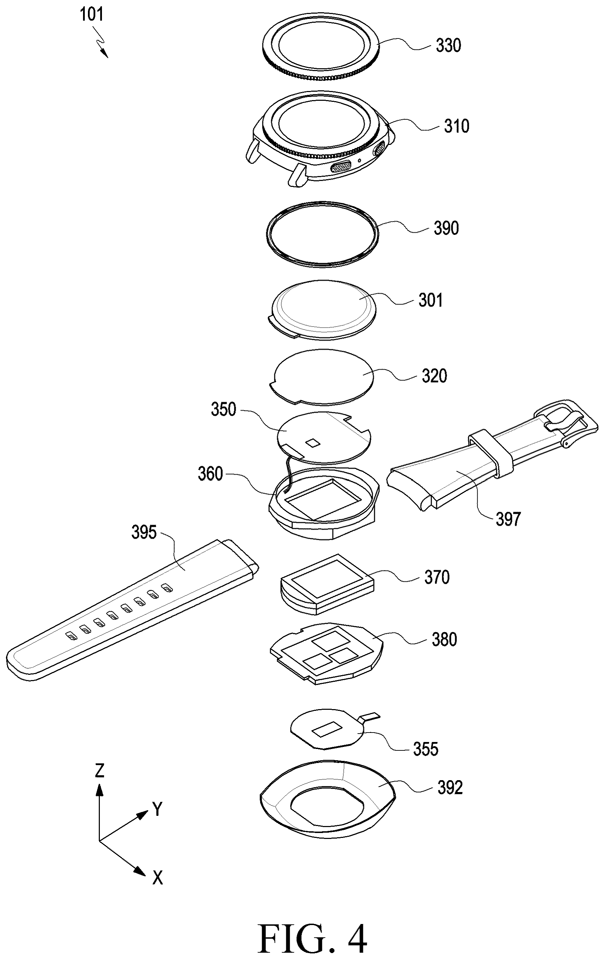

According to an embodiment, the electronic device 101 may include a display (e.g., the display 320 of FIG. 4), audio modules 205, 208 (e.g., the audio module 170 of FIG. 1), a sensor module 211 (e.g., the sensor module 176 of FIG. 1), key input devices 202, 203, 204 (e.g., the input module 150 of FIG. 1), or a connector hole 209 (e.g., the connecting terminal 178 of FIG. 1). According to an embodiment, the electronic device 101 may exclude at least one (e.g., the key input devices 202, 203, and 204, connector hole 209, or sensor module 211) of the components or may add other components.

According to an embodiment, the display (e.g., the display 320 of FIG. 4) may be visually exposed through a significant portion of the front plate 201. The display may have a shape corresponding to the shape of the front plate 201, e.g., a circle, ellipse, or polygon. The display may be coupled with, or disposed adjacent, a touch detection circuit, a pressure sensor capable of measuring the strength (pressure) of touches, and/or fingerprint sensor.

The audio modules 205 and 208 may include a microphone hole 205 and a speaker hole 208. A microphone for acquiring external sounds may be disposed in the microphone hole 205. In an embodiment, a plurality of microphones may be disposed to detect the direction of the sound. The speaker hole 208 may be used for an external speaker or a receiver for phone talks. According to an embodiment, a speaker may be included without the speaker hole (e.g., a piezo speaker).

The sensor module 211 may produce an electrical signal or data value corresponding to the internal operation state or external environment state of the electronic device 101. The sensor module 211 may include, e.g., a biometric sensor module 211 (e.g., a heartrate monitor (HRM) sensor) disposed on the second surface 210B of the housing 210. The electronic device 101 may include a sensor module not shown, e.g., at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The key input devices 202, 203, and 204 may include a wheel key 202 disposed on the first surface 210A of the housing 210 to be rotatable in at least one direction and/or key buttons 203 and 204 disposed on the side surface 210C of the housing 210. The wheel key 202 may have a shape corresponding to the shape of the front plate 201. According to an embodiment, the electronic device 101 may exclude all or some of the above-mentioned key input devices 202, 203, and 204 and the excluded key input devices 202, 203, and 204 may be implemented in other forms, e.g., as soft keys on the display. The connector hole 209 may receive a connector (e.g., a universal serial bus (USB) connector) for transmitting and receiving power and/or data to/from an external electronic device. Another connector hole (not shown) may be included for receiving a connector for transmitting and receiving audio signals to/from the external electronic device. The electronic device 101 may further include a connector cover (not shown) to cover at least part of, e.g., the connector hole 209 and preventing undesirable materials from entering the connector hole.

The wearing members 250 and 260 may detachably be fastened to at least portions of the housing 210 via locking members 251 and 261. The locking members 251 and 261 may include components or parts for coupling, such as pogo pins, and, according to an embodiment, may be replaced with protrusions or recesses formed on/in the wearing members 250 and 260. For example, the wearing members 250 and 260 may be coupled in such a manner as to be fitted into or over the recesses or protrusions formed on the housing 210. The wearing members 250 and 260 may include one or more of a fastening member 252, fastening member coupling holes 253, a band guide member 254, and a band fastening ring 255.

The fastening member 252 may be configured to allow the housing 210 and the wearing members 250 and 260 to be fastened to the user's body portion (e.g., wrist or ankle). The fastening member coupling holes 253 may fasten the housing 210 and the wearing members 250 and 260 to the user's body portion, corresponding to the fastening member 252. The band guide member 254 may be configured to restrict movement of the fastening member 252 to a certain range when the fastening member 252 fits into one of the fastening member coupling holes 253, thereby allowing the wearing members 250 and 260 to be tightly fastened onto the user's body portion. The band fastening ring 255 may limit the range of movement of the wearing members 250 and 260, with the fastening member 252 fitted into one of the fastening member coupling holes 253.

FIG. 4 is an exploded perspective view illustrating the wearable electronic device of FIG. 2 according to an embodiment of the disclosure.

The embodiment of FIG. 4 may be combinable with the embodiments of FIGS. 1 to 3, or the embodiments of FIGS. 5 to 20.

Referring to FIG. 4, the wearable electronic device 101 (e.g., the electronic device 101 of FIG. 1, or the wearable electronic device 101 of FIGS. 2 to 3) may include a side bezel structure 310 (e.g., the side bezel structure 206 of FIGS. 2 to 3), a wheel key 330 (e.g., the wheel key 202 of FIGS. 2 to 3), a front plate 301 (e.g., the front plate 201 of FIG. 2), a display 320, a first antenna 350, a second antenna (e.g., an antenna included in the second circuit board 355), a supporting member 360 (e.g., a bracket), a battery 370, a printed circuit board 380, a sealing member 390, a rear plate 392, and wearing members 395, 397 (e.g., the wearing members 250, 260 of FIG. 2 or 3). At least one of the components of the electronic device 101 may be the same or similar to at least one of the components of the electronic device 101 of FIG. 2 or 3 and no duplicate description is made below.

According to an embodiment, the supporting member 360 may be disposed inside the electronic device 101 to be connected with the side bezel structure 310 or integrated with the side bezel structure 310. The supporting member 360 may be formed of, e.g., a metal and/or non-metallic material (e.g., polymer). The display 320 (e.g., the display module 160 of FIG. 1) may be joined onto one surface of the supporting member 360, and the printed circuit board 380 may be joined onto the opposite surface of the supporting member 360. A processor, memory, and/or interface may be mounted on the printed circuit board 380.

The processor (e.g., the processor 120 of FIG. 1) may include one or more of, e.g., a central processing unit, an application processor, a graphic processing unit (GPU), a sensor processor, or a communication processor.

The memory (e.g., the memory 130 of FIG. 1) may include, e.g., volatile or non-volatile memory.

The interface (e.g., the interface 177 of FIG. 1) may include, for example, a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the battery 370 (e.g., the battery 189 of FIG. 1) may be a device for supplying power to at least one component of the electronic device 101, and may include, e.g., a primary cell which is not rechargeable, a secondary cell which is rechargeable, or a fuel cell. At least a portion of the battery 370 may be disposed on substantially the same plane as the printed circuit board 380. The battery 370 may be integrally or detachably disposed inside the electronic device 101.

According to an embodiment, the first antenna 350 (e.g., the antenna module 197 of FIG. 1) may be disposed between the display 320 and the supporting member 360. The first antenna 350 may include, e.g., a near-field communication (NFC) antenna, a wireless charging antenna, and/or a magnetic secure transmission (MST) antenna. The first antenna 350 may perform short-range communication with an external device, wirelessly transmit/receive power necessary for charging, or transmit magnetic-based signals including payment data or short-range communication signals. In an embodiment, an antenna structure may be formed by a portion or combination of the side bezel structure 310 and/or the supporting member 360.

According to an embodiment, the second circuit board 355 may be disposed between the circuit board 380 and the rear plate 392. The second circuit board 355 may include an antenna (e.g., the antenna module 197 of FIG. 1), e.g., a near-field communication (NFC) antenna, a wireless charging antenna, and/or a magnetic secure transmission (MST) antenna. For example, the second circuit board 355 may perform short-range communication with an external device, wirelessly transmit/receive power necessary for charging, or transmit magnetic-based signals including payment data or short-range communication signals. According to an embodiment, an antenna structure may be formed of a portion or combination of the side bezel structure 310 and/or the rear plate 392. According to various embodiments, when the electronic device 101 (e.g., the electronic device 101 of FIGS. 2 and 3) includes a sensor module (e.g., the sensor module 211 of FIG. 3), the sensor circuit disposed on the second circuit board 355 or a sensor element (e.g., a photoelectric conversion element or an electrode pad) separate from the second circuit board 355 may be disposed. For example, an electronic component provided as the sensor module may be disposed between the circuit board 380 and the rear plate 392.

According to an embodiment, the sealing member 390 may be positioned between the side bezel structure 310 and the front plate 301. The sealing member 390 may be configured to block or reduce moisture or foreign bodies that may enter the space surrounded by the side bezel structure 310 and the front plate 301, from the outside.

FIG. 5 is an exploded perspective view illustrating a wearable electronic device according to an embodiment of the disclosure.

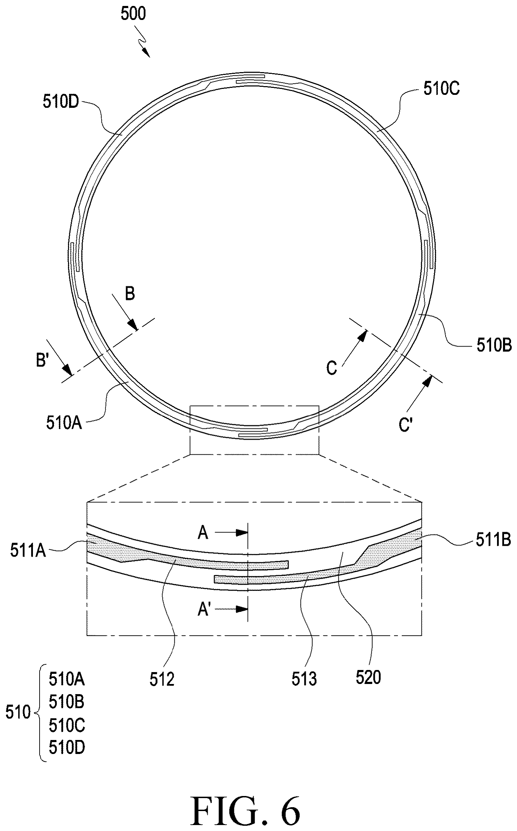

FIG. 6 is a plan view illustrating a sealing member according to an embodiment of the disclosure.

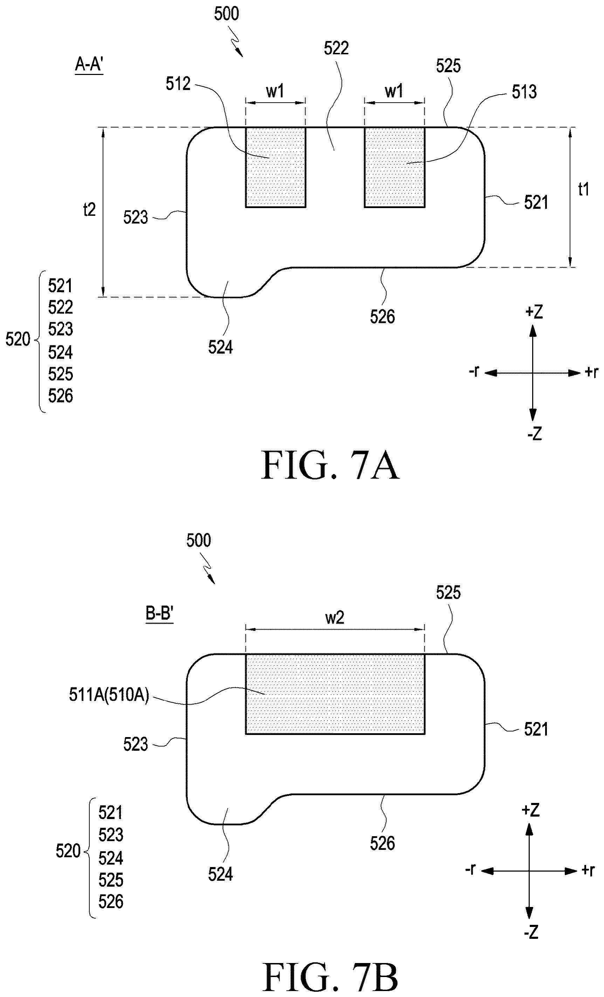

FIG. 7A is a cross-sectional view taken along line A-A' of FIG. 6 according to an embodiment of the disclosure.

FIG. 7B is a cross-sectional view taken along line B-B' of FIG. 6 according to an embodiment of the disclosure.

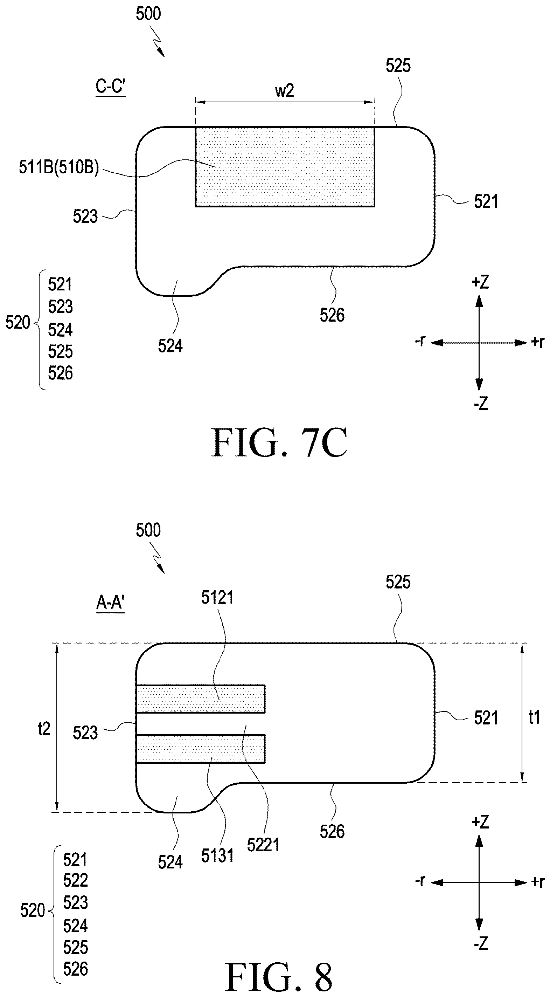

FIG. 7C is a cross-sectional view taken along line C-C' of FIG. 6 according to an embodiment of the disclosure.

FIG. 8 is a cross-sectional view taken along line A-A' of FIG. 6 according to an embodiment of the disclosure.

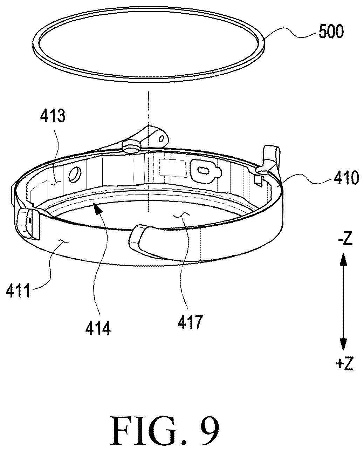

FIG. 9 is an exploded perspective view illustrating a side bezel structure and a sealing member according to an embodiment of the disclosure.

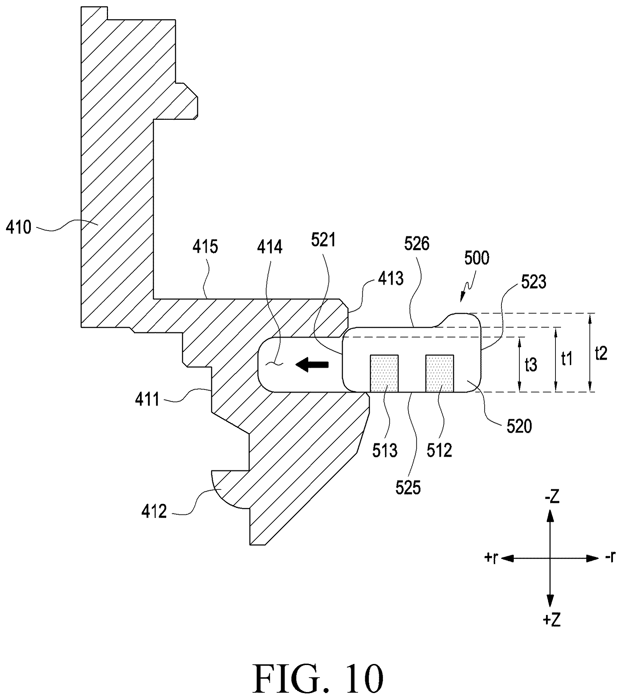

FIG. 10 is a cross-sectional view illustrating a state in which a sealing member is inserted into a groove of the side bezel structure according to an embodiment of the disclosure.

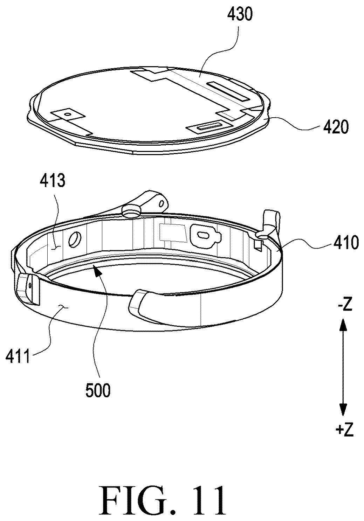

FIG. 11 is an exploded perspective view illustrating a side bezel structure and a cover window according to an embodiment of the disclosure.

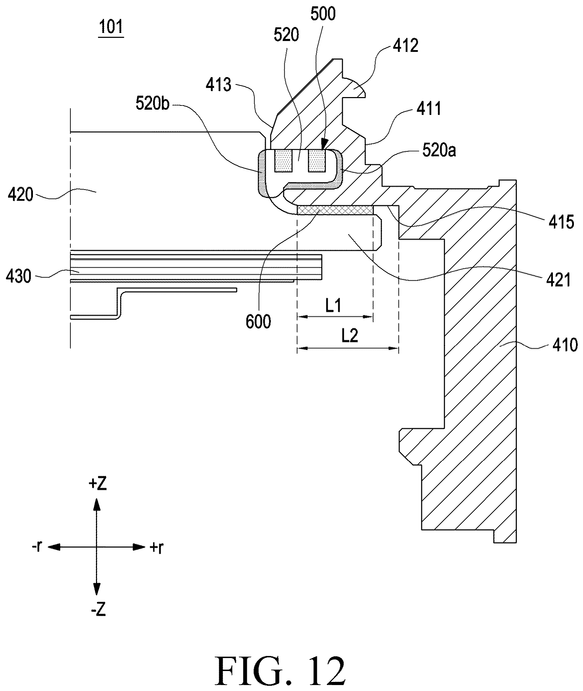

FIG. 12 is a cross-sectional view illustrating a wearable electronic device according to an embodiment of the disclosure.

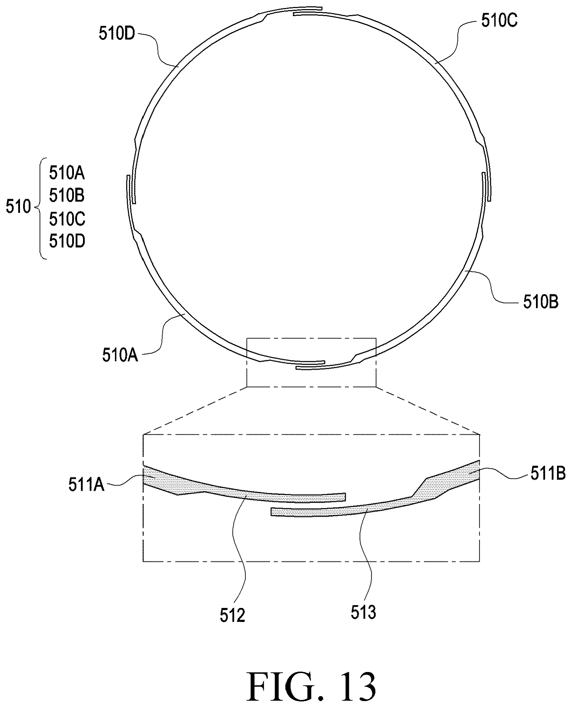

The embodiments of FIGS. 5 to 12 may be combinable with the embodiments of FIGS. 1 to 4, or the embodiments of FIGS. 13 to 20.

Referring to FIGS. 5 to 12, the wearable electronic device 101 (e.g., the electronic device 101 of FIG. 1, or the wearable electronic device 101 of FIGS. 2 to 4) may include a housing 401, a wheel key 402, a side bezel structure 410, a front plate 420, a display 430, a supporting member 460, a rear plate 492, a sealing member 500, or an adhesive member 600.

The configuration of the wheel key 402, side bezel structure 410, front plate 420, display 430, supporting member 460, or rear plate 492 of FIGS. 5 to 12 may be identical in whole or part to the configuration of the wheel key 330, side bezel structure 310, front plate 301, display 320, supporting member 460, or rear plate 392 of FIG. 4.

According to an embodiment, the wearable electronic device 101 may include a housing 401. The housing 401 may form at least a portion of an exterior of the wearable electronic device 101. The housing 401 may include an inner space, and various electrical components may be disposed in the inner space of the housing 401.

According to an embodiment, the housing 401 may include a side bezel structure 410 (e.g., the side bezel structure 310 of FIG. 4), a supporting member 460 (e.g., the supporting member 360 of FIG. 4), or a rear plate 492 (e.g., the rear plate 392 of FIG. 4).

According to an embodiment, the wheel key 402 (e.g., the wheel key 330 of FIG. 4) may be disposed on the housing 401 and may be configured to be rotatable in at least one direction relative to the housing 401. For example, the wheel key 402 may be rotatably coupled to the side bezel structure 410.

According to an embodiment, the front plate 420 (e.g., the front plate 420 of FIG. 4) may cover a display (e.g., the display 430 of FIG. 12). The front plate 420 may protect the display 430 from external impact. The front plate 420 may be defined and/or referred to as a cover window.

According to an embodiment, a display (e.g., the display 430 of FIG. 12) may be visually exposed through a substantial portion of the front plate 420. For example, a visual image provided from the display may be exposed or provided to the user through the front plate 420. The display 430 may be coupled with, or disposed adjacent, a touch detection circuit, a pressure sensor capable of measuring the strength (pressure) of touches, and/or fingerprint sensor. The display 430 may be attached to a rear surface of the front plate 420 (e.g., a surface facing the -Z direction of FIG. 5). The display 430 may be defined and/or referred to as a display panel. The display 430 and the front plate 420 may be collectively referred to as a display module.

According to an embodiment, the front plate 420 may be disposed between the side bezel structure 410 and a supporting member 460 (e.g., the supporting member 360 of FIG. 4). At least a portion of the front plate 420 may be coupled to at least a portion of the side bezel structure 410.

According to an embodiment, the front plate 420 may be at least partially exposed to an exterior of the housing 401 through an opening 417 of the side bezel structure 410.

According to an embodiment, the front plate 420 may be formed of a substantially transparent material (e.g., a glass plate including various coating layers, or a polymer plate).

According to an embodiment, the supporting member 460 may be disposed between the side bezel structure 410 and the rear plate 492. The supporting member 460 may be configured to support the display 430.

According to an embodiment, the sealing member 500 (e.g., the sealing member 390 of FIG. 4) may be disposed between the side bezel structure 410 and the front plate 420. For example, the sealing member 500 may be configured to seal between the side bezel structure 410 and the front plate 420. For example, the sealing member 500 may be configured to block or reduce foreign objects or moisture from entering an interior of the wearable electronic device 101 from an exterior of the wearable electronic device 101.

According to an embodiment, the sealing member 500 may be formed in an overall circular ring shape. The shape of the sealing member 500 is not limited thereto and may have various shapes according to the shapes of the side bezel structure 410 and the front plate 420. For example, the sealing member 500 may have an elliptical or polygonal shape.

Referring to FIGS. 6 to 8, the sealing member 500 may include at least one core portion 510, or an elastic portion 520. According to an embodiment, the elastic portion 520 may surround the at least one core portion 510.

According to an embodiment, the at least one core portion 510 may be formed of a material having a specific hardness. For example, the at least one core portion 510 may include a metal, carbon, or plastic material having a specific hardness. For example, the at least one core portion 510 may have a first hardness, and the first hardness may be greater than a hardness of the elastic portion 520. For example, the at least one core portion 510 may be formed of a relatively hard member compared to the elastic portion 520.

According to an embodiment, the at least one core portion 510 may be configured to support the elastic portion 520 having elasticity when the sealing member 500 is disposed between the side bezel structure 410 and the front plate 420. For example, the at least one core portion 510 may suppress or limit bending or twisting that may occur during assembly of the sealing member 500 due to flexibility of the elastic portion 520.

According to an embodiment, the elastic portion 520 may be formed of a material having specific elasticity. For example, the elastic portion 520 may include a silicone material or a rubber material having specific elasticity. The elastic portion 520 may have a second hardness, and the second hardness may be less than the first hardness of the at least one core portion 510. The elastic portion 520 may be formed of a relatively soft member compared to the at least one core portion 510. The elastic portion 520 may provide a space in which the at least one core portion 510 may be disposed. The elastic portion 520 may surround the at least one core portion 510.

According to an embodiment, the elastic portion 520 may include an outer surface 521 and an inner surface 523 facing a direction opposite to the outer surface 521. According to an embodiment, the outer surface 521 may extend overall circularly along a circumferential direction of the sealing member 500. The inner surface 523 may extend overall circularly along the circumferential direction of the sealing member 500. The outer surface 521 and the inner surface 523 may form concentric circles.

According to an embodiment, the outer surface 521 may contact at least a portion of the side bezel structure 410, and the inner surface 523 may contact at least a portion of the front plate 420.

According to an embodiment, the outer surface 521 of the elastic portion 520 may form an outer surface of the sealing member 500, and the inner surface 523 of the elastic portion 520 may form an inner surface of the sealing member 500.

According to an embodiment, a direction from the inner surface 523 of the elastic portion 520 toward the outer surface 521 (e.g., the +r direction in FIGS. 7A to 7C), or a direction from the outer surface 521 of the elastic portion 520 toward the inner surface 523 (e.g., the -r direction in FIGS. 7A to 7C) may be defined and/or referred to as a width direction or a first direction of the sealing member 500 and components of the sealing member 500. According to the illustrated embodiment, the +r direction may be defined and/or referred to as a radial direction of the circular sealing member 500, and the radial direction may be a direction from a center of the sealing member 500 toward a circumference of the sealing member 500. The -r direction may be defined and/or referred to as a center direction of the circular sealing member 500, and the center direction may be a direction from the circumference of the sealing member 500 toward the center of the sealing member 500. The center direction may face opposite to the radial direction.

According to an embodiment, the at least one core portion 510 may include a plurality of core portions 510A, 510B, 510C, 510D. According to the illustrated embodiment, four core portions 510A, 510B, 510C, 510D are disclosed, but the number of the plurality of core portions is not limited thereto and may have various numbers of two or more.

According to an embodiment, the plurality of core portions 510A, 510B, 510C, 510D may be disposed along a circumferential direction of the sealing member 500. For example, the plurality of core portions 510A, 510B, 510C, 510D may be sequentially disposed along the circumferential direction of the sealing member 500. For example, the plurality of core portions 510A, 510B, 510C, 510D may include a first core portion 510A, a second core portion 510B, a third core portion 510C, or a fourth core portion 510D.

According to an embodiment, each of the plurality of core portions 510A, 510B, 510C, 510D may at least partially overlap an adjacent core portion. Hereinafter, the arrangement relationship between the first core portion 510A and the second core portion 510B is described as an example, but this description may also be applied to the adjacent second core portion 510B and third core portion 510C, the adjacent third core portion 510C and fourth core portion 510D, or the adjacent fourth core portion 510D and first core portion 510A. Further, descriptions made by taking any one core portion as an example may be equally or similarly applied to the remaining core portions.

According to an embodiment, the at least one core portion 510 may include a first core portion 510A or a second core portion 510B adjacent to the first core portion 510A.

According to an embodiment, the first core portion 510A and the second core portion 510B may each include a base portion (e.g., the base portions 511A, 511B of FIGS. 7B to 7C). According to an embodiment, the configuration of a first base portion (e.g., the base portion 511A of FIG. 7B) of the first core portion 510A may be substantially identical or similar to the configuration of a second base portion (e.g., the base portion 511B of FIG. 7C) of the second core portion 510B.

According to an embodiment, the first core portion 510A may include a first base portion 511A or a first wing portion 512, 5121 extending from the first base portion 511A toward the second core portion 510B. The first base portion 511A and the first wing portion 512, 5121 may extend overall along the circumferential direction of the sealing member 500.

According to an embodiment, the second core portion 510B may include a second base portion 511B or a second wing portion 513 extending from the second base portion 511B toward the first core portion 510A. The second base portion 511B and the second wing portion 513, 5131 may extend overall along the circumferential direction of the sealing member 500.

According to an embodiment (e.g., FIG. 7A), the first wing portion 512 may overlap the second wing portion 513 in a width direction of the sealing member 500 (e.g., the r-axis direction of FIG. 7A). For example, the first wing portion 512 may overlap the second wing portion 513 in a direction from the inner surface 523 of the sealing member 500 toward the outer surface 521 of the sealing member 500 (e.g., the r-axis direction of FIG. 7A).

According to an embodiment (e.g., FIG. 7A), the sealing member 500 may include one surface (e.g., the inner surface 523 of FIG. 7A) or another surface (e.g., the outer surface 521 of FIG. 7A) facing a direction opposite to the one surface. At least a portion of the first core portion 510A (e.g., the first wing portion 512 of FIG. 7A) may overlap at least a portion of the second core portion 510B (e.g., the second wing portion 513 of FIG. 7A) in a direction from the one surface of the sealing member 500 (e.g., the inner surface 523 of FIG. 7A) toward the another surface of the sealing member (e.g., the outer surface 521 of FIG. 7A).

According to an embodiment (e.g., FIG. 8), the first wing portion 5121 may overlap the second wing portion 5131 in a height direction of the sealing member 500 (e.g., the Z-axis direction of FIG. 8). For example, the first wing portion 5121 may overlap the second wing portion 5131 in a direction from an upper surface 525 of the sealing member 500 toward a lower surface 526 of the sealing member 500 (e.g., the Z-axis direction of FIG. 8).

According to an embodiment (e.g., FIG. 8), the sealing member 500 may include one surface (e.g., the upper surface 525 of FIG. 8) or another surface (e.g., the lower surface 526 of FIG. 8) facing a direction opposite to the one surface. At least a portion of the first core portion 510A (e.g., the first wing portion 5121 of FIG. 8) may overlap at least a portion of the second core portion 510B (e.g., the second wing portion 5131 of FIG. 8) in a direction from the one surface of the sealing member 500 (e.g., the upper surface 525 of FIG. 8) toward the another surface of the sealing member (e.g., the lower surface 526 of FIG. 8).

Hereinafter, the sealing member 500 and components of the sealing member 500 are described by taking FIGS. 7A to 7C as examples, but this description may be equally and/or similarly applied and/or understood to the sealing member 500 and components of the sealing member 500 of FIG. 8.

Referring to FIGS. 7A to 7C, according to an embodiment, the first wing portion 512 may be disposed relatively closer to the inner surface 523 of the sealing member 500 than the second wing portion 513. The second wing portion 513 may be disposed relatively closer to the outer surface 521 of the sealing member 500 than the first wing portion 512.

According to an embodiment, the first base portion 511A may not overlap the second base portion 511B in a width direction of the sealing member 500 (e.g., the r-axis direction of FIGS. 7B to 7C).

According to an embodiment, the first core portion 510A and the second core portion 510B may overlap or intersect within a predetermined range, but may not overlap or intersect outside the predetermined range.

According to an embodiment, the first wing portion 512 may have a first width w1 in a width direction of the sealing member 500 (e.g., the r-axis direction of FIG. 7A). The second wing portion 513 may have the first width w1 in the width direction of the sealing member 500 (e.g., the r-axis direction of FIG. 7A). A width of the first wing portion 512 may be substantially the same as a width of the second wing portion 513.

According to an embodiment, the first base portion 511A may have a second width w2 in a width direction of the sealing member 500 (e.g., the r-axis direction of FIG. 7B). The second base portion 511B may have the second width w2 in the width direction of the sealing member 500 (e.g., the r-axis direction of FIG. 7C). A width of the first base portion 511A may be substantially the same as a width of the second base portion 511B.

According to an embodiment, the second width w2 of the base portions 511A, 511B may be greater than the first width w1 of the wing portions 512, 513. For example, the second width w2 may be at least twice the first width w1. For example, a width W2 of the first base portion 511A (or a width W2 of the second base portion 511B) may be greater than a sum of a width W1 of the first wing portion 512 and a width W1 of the second wing portion 513.

According to an embodiment, the elastic portion 520 may be disposed to surround or cover at least a portion of the at least one core portion 510.

According to an embodiment, the elastic portion 520 may include an outer surface 521, an inner surface 523, an upper surface 525, or a lower surface 526. The outer surface 521 of the elastic portion 520 may tightly contact at least a portion of the side bezel structure 410. The inner surface 523 of the elastic portion 520 may tightly contact at least a portion of the front plate 420.

According to an embodiment, the outer surface 521 of the elastic portion 520 may face a direction opposite to the inner surface 523 of the elastic portion 520. The outer surface 521 and the inner surface 523 may be connected by the upper surface 525 and the lower surface 526.

According to an embodiment, the upper surface 525 of the elastic portion 520 may face a direction toward an exterior of the wearable electronic device 101 (e.g., the +Z direction of FIGS. 7A to 7C). The lower surface 526 of the elastic portion 520 may face a direction toward an interior of the wearable electronic device 101 (e.g., the -Z direction of FIGS. 7A to 7C).

According to an embodiment, a direction toward the exterior of the wearable electronic device 101 (e.g., the +Z direction of FIGS. 7A to 7C) or a direction toward the interior of the wearable electronic device 101 (e.g., the -Z direction of FIGS. 7A to 7C) may be defined and/or referred to as a thickness direction (e.g., the Z-axis direction of FIG. 5) or a height direction (e.g., the Z-axis direction of FIG. 5) of the sealing member 500 and components of the sealing member 500. The thickness direction or height direction (e.g., the -Z direction of FIGS. 7A to 7C) may be a direction substantially perpendicular to the width direction (e.g., the r-axis direction of FIGS. 7A to 7C). The thickness direction or height direction may be defined and/or referred to as a second direction. The thickness direction or the second direction may be defined as a direction from a display (e.g., the display 430 of FIG. 12) toward a front plate (e.g., the front plate 420 of FIG. 12), or a direction from a front plate (e.g., the front plate 420 of FIG. 12) toward a display (e.g., the display 430 of FIG. 12).

According to an embodiment, the elastic portion 520 may further include a protrusion 524 protruding from at least a portion of the lower surface 526. The protrusion 524 may protrude from a portion of the lower surface 526 adjacent to the inner surface 523. The protrusion 524 may be formed at a corner between the inner surface 523 and the lower surface 526. The protrusion 524 may also be formed on the upper surface 525 of the elastic portion 520.

According to an embodiment, the upper surface 525 of the elastic portion 520 may be disposed on substantially the same plane as an upper surface of the at least one core portion 510.

According to an embodiment, at least a portion of the elastic portion 520 may have a first thickness t1 in a thickness direction of the sealing member 500 (e.g., the Z-axis direction of FIGS. 7A to 7C). A remaining portion of the elastic portion 520 may have a second thickness t2 in the thickness direction of the sealing member 500 (e.g., the Z-axis direction of FIGS. 7A to 7C). For example, the first thickness t1 may be a thickness of a portion of the elastic portion 520 without the protrusion 524, and the second thickness t2 may be a thickness of a portion of the elastic portion 520 with the protrusion 524. The second thickness t2 may be greater than the first thickness t1.

According to an embodiment, the outer surface 521 of the elastic portion 520 may have a first height t1 in a height direction of the sealing member 500 (e.g., the Z-axis direction of FIGS. 7A to 7C). A remaining portion of the elastic portion 520 may have a second height t2 based on the height direction of the sealing member 500 (e.g., the Z-axis direction of FIGS. 7A to 7C). For example, the first height t1 may be a height of a portion of the elastic portion 520 without the protrusion 524, and the second height t2 may be a height of a portion of the elastic portion 520 with the protrusion 524. The second height t2 may be greater than the first height t1.

According to an embodiment, the elastic portion 520 may include at least a portion 522 disposed between the first wing portion 512 and the second wing portion 513.

Referring to FIG. 8, the elastic portion 520 may include at least a portion 5221 disposed between the first wing portion 5121 and the second wing portion 5131.

Referring to FIGS. 9 to 10, the sealing member 500 may be coupled to the side bezel structure 410. For example, the sealing member 500 may be coupled to a groove 414 recessedly formed in at least a portion of an inner surface 413 of the side bezel structure 410.

According to an embodiment, the side bezel structure 410 may include an outer surface 411 facing the same direction as the outer surface 521 of the sealing member 500, an inner surface 413 facing the same direction as the inner surface 523 of the sealing member 500, or a seating surface 415.

According to an embodiment, the side bezel structure 410 may further include a protruding structure 412 protruding from at least a portion of the outer surface 411. The protruding structure 412 may extend along a circumferential direction of the side bezel structure 410. The wheel key 402 may be rotatably coupled to the protruding structure 412.

According to an embodiment, the side bezel structure 410 may further include a groove 414 recessed in at least a portion of the inner surface 413. At least a portion of the sealing member 500 may be inserted into the groove 414.

According to an embodiment, an opening 417 of the side bezel structure 410 may be defined by the inner surface 413 of the side bezel structure 410. A radius of the opening 417 may be smaller than a radius of the outer surface 521 of the sealing member 500.

According to an embodiment, when coupling or assembling the sealing member 500 to the side bezel structure 410, the sealing member 500 may be moved in a vertical direction (e.g., the Z-axis direction of FIG. 9) toward the side bezel structure 410 in an aligned state (e.g., FIG. 9) at a lower portion of the side bezel structure 410 (e.g., the -Z direction side of FIG. 9). Since a radius (or diameter) of the outer surface 521 of the sealing member 500 is greater than a radius (or diameter) of the opening 417, the sealing member 500 may be inserted into the groove 414 in an at least partially bent state.

According to an embodiment, a region where the wing portions 512, 513 of the sealing member 500 overlap (e.g., FIG. 7A) may be relatively more elastic than a region having only the base portions 511A, 511B of the sealing member 500 (e.g., FIGS. 7B or 7C). Accordingly, the sealing member 500 may be inserted into the groove 414 in a state in which the region where the wing portions 512, 513 of the sealing member 500 overlap (e.g., FIG. 7A) is at least partially bent.

According to an embodiment, the sealing member 500 may be assembled or installed in the groove 414 by being pushed toward the groove 414 in an at least partially bent state.

According to an embodiment, the groove 414 may tightly contact the upper surface 525, lower surface 526, and outer surface 521 of the sealing member 500. Accordingly, separation of the sealing member 500 installed in the groove 414 may be limited.

According to an embodiment, the sealing member 500 may be configured to be at least partially bendable, thereby being insertable into the groove 414 formed in the inner surface 413 of the side bezel structure 410. For example, when a sealing member includes one core portion having a relatively thick and consistent width, the sealing member may not be provided to be at least partially bendable. In such a case, the sealing member may not be assembled vertically into an opening having a radius smaller than a radius of an outer surface of the sealing member, and thus may not be inserted into a groove formed in an inner surface of a side bezel structure. The sealing member 500 may be assembled vertically into the opening 417 having a radius smaller than a radius of the outer surface 521 of the sealing member 500 in an at least partially bent state. The sealing member 500 may be press-fitted into the groove 414 by a force pressed in a radial direction of the sealing member 500 (e.g., the +r direction of FIG. 9) in an at least partially bent state.

According to an embodiment, the groove 414 may have a third thickness t3 in a thickness direction of the sealing member 500 (e.g., the Z-axis direction of FIG. 9). The third thickness t3 may be smaller than the second thickness t2 of the sealing member 500 (or the elastic portion 520).

According to an embodiment, since the second thickness t2 is greater than the third thickness t3, the sealing member 500 may be press-fitted into the groove 414. When the sealing member 500 is inserted into the groove 414, the elastic portion 520 may be at least partially elastically deformed. For example, the elastic portion 520 may be at least partially compressed. Accordingly, a sealing force may be enhanced at a portion where the groove 414 and the sealing member 500 are in tight contact.

According to an embodiment, when the sealing member 500 is at least partially bent, the sealing member 500 may have damage to the elastic portion 520 limited or prevented. For example, in the sealing member 500, the first wing portion 512 and the second wing portion 513 may overlap in a radial direction (e.g., the +r direction of FIG. 9). Further, at least a portion of the base portions 511A, 511B may be positioned in the radial direction in a region of the sealing member 500 without the first wing portion 512 and the second wing portion 513. For example, in the ring-shaped sealing member 500, at least a portion of the at least one core portion 510 may be positioned in all regions in a circumferential direction of the sealing member 500. For example, if a plurality of core portions do not overlap adjacent core portions in a radial direction, a region having only an elastic portion without a core portion may be formed in the radial direction in a sealing member. In such a case, an elastic portion in a region without a core portion may be excessively bent when the sealing member is at least partially bent, causing damage or making assembly to a side bezel structure difficult.

According to an embodiment, as the first wing portion 512 and the second wing portion 513 overlap in a radial direction or width direction, the sealing member 500 may be limited or prevented from being excessively bent when at least partially bent. Accordingly, damage to the elastic portion 520 of the sealing member 500 may be prevented or limited. Further, by preventing the sealing member 500 from being excessively bent, the sealing member 500 may be easily assembled to the side bezel structure 410. According to an embodiment, the at least one core portion 510 of the sealing member 500 may be defined as forming a closed loop structure in the sealing member 500 by being at least partially positioned in all regions of the sealing member 500 along a circumferential direction of the sealing member 500. For example, the at least one core portion 510 may at least partially be present in all portions of the sealing member 500 along the circumferential direction of the sealing member 500.

Referring to FIGS. 11 to 12, the front plate 420 and the display 430 may be coupled to the side bezel structure 410 to which the sealing member 500 is assembled. According to an embodiment, the front plate 420 and the display 430 may be assembled to the side bezel structure 410 in a vertical direction in an aligned state at a lower portion of the side bezel structure 410 (e.g., the -Z direction side of FIG. 11).

According to an embodiment, the display 430 may be coupled to a rear surface of the front plate 420 (e.g., a surface facing the -Z direction of FIG. 12).

According to an embodiment, the front plate 420 may include an edge portion 421 protruding from at least a portion of the front plate 420. The edge portion 421 may face a seating surface 415 of the side bezel structure 410. For example, the edge portion 421 may be configured to engage with the seating surface 415. By configuring the edge portion 421 and the seating surface 415 to mutually engage, separation of the front plate 420 to an exterior of the side bezel structure 410 may be limited. According to an embodiment, the seating surface 415 may form a region overlapping the edge portion 421 of the front plate 420 in a thickness direction of the sealing member 500 (e.g., the Z-axis direction of FIG. 12).

According to an embodiment, the edge portion 421 may have a predetermined thickness or a designated thickness (e.g., a thickness in the Z-axis direction of FIG. 12). The edge portion 421 may extend overall in a ring shape.

According to an embodiment, the electronic device 101 may further include an adhesive member 600. The adhesive member 600 may be configured to adhere the seating surface 415 and the edge portion 421. The adhesive member 600 may have a ring shape extending along a circumferential direction of the sealing member 500. The adhesive member 600 may be seated on the edge portion 421. The adhesive member 600 may be provided in a ring shape extending along a ring shape of the edge portion 421. The adhesive member 600 may be disposed along the edge portion 421.

According to an embodiment, the adhesive member 600 may include a tape or an adhesive. According to an embodiment, the adhesive member 600 may include a sponge filled with an adhesive.

According to an embodiment, at least a portion of the adhesive member 600 may overlap at least a portion of the sealing member 500 in a thickness direction of the sealing member 500 (e.g., the Z-axis direction of FIG. 12).

According to an embodiment, the adhesive member 600 may have a first length L1 in a width direction of the sealing member 500 (e.g., the r-axis direction of FIG. 12).

According to an embodiment, the seating surface 415 may have a second length L2 in a width direction of the sealing member 500 (e.g., the r-axis direction of FIG. 12). The second length L2 may be substantially the same as the first length L1, or may be greater than the first length L1.

According to an embodiment, the adhesive member 600 may not overlap the sealing member 500 in a width direction of the sealing member 500 (e.g., the r-axis direction of FIG. 12).

According to an embodiment, as the adhesive member 600 does not overlap the sealing member 500 in a width direction, the adhesive member 600 may be disposed on substantially most (or almost all portions) of the edge portion 421 or the seating surface 415. Accordingly, a bonding force between the side bezel structure 410 and the front plate 420 may be increased. For example, in a wearable electronic device where a sealing member is positioned between a seating surface and an edge portion, the sealing member and an adhesive member may be disposed together in a limited space between the seating surface and the edge portion. In such a case, the adhesive member may overlap the sealing member in a width direction of the sealing member, and a length of the adhesive member in the width direction may be limited. Accordingly, since a bonding area of the adhesive member may be difficult to secure sufficiently, a bonding force between a side bezel structure and a front plate may not be secured sufficiently.

According to an embodiment, since the sealing member 500 is positioned in a groove (e.g., the groove 414 of FIG. 10) formed in the inner surface 413 of the side bezel structure 410, the sealing member 500 may not overlap the adhesive member 600 in a width direction (e.g., the r-axis direction of FIG. 12). As the adhesive member 600 does not overlap the sealing member 500 in a width direction, the adhesive member 600 may be disposed on substantially most (or almost all portions) of the edge portion 421 or the seating surface 415, thereby sufficiently securing a bonding force between the side bezel structure 410 and the front plate 420.

According to the illustrated embodiment, reference numerals 520a and 520b of the sealing member 500 represent some regions 520a, 520b of the elastic portion 520 disposed and compressed between the side bezel structure 410 and the front plate 420.

According to an embodiment, an outer surface (e.g., the outer surface 521 of FIG. 11) of the elastic portion 520 may tightly contact at least a portion of the side bezel structure 410, and an inner surface (e.g., the inner surface 523 of FIG. 11) of the elastic portion 520 may tightly contact at least a portion of the front plate 420.

According to an embodiment, a second thickness (e.g., the second thickness t2 of FIG. 11) on the inner surface 523 side of the elastic portion 520 may be greater than a first thickness (e.g., the first thickness t1 of FIG. 11) on the outer surface 521 side of the elastic portion 520.

According to an embodiment, at least a portion of the elastic portion 520 may have a different thickness from other portions of the elastic portion 520 in a thickness direction (e.g., the r-axis direction of FIG. 12). For example, a thickness of the elastic portion 520 inserted into the groove 414 of the side bezel structure 410 may be smaller than a thickness of a portion in tight contact with the front plate 420.

According to an embodiment, by providing a relatively small thickness of at least a portion of the sealing member 500 inserted into the groove 414, a size of the groove 414 of the side bezel structure 410 may be relatively small. Accordingly, rigidity of the side bezel structure 410 may not be excessively decreased.

According to an embodiment, by providing a relatively large thickness of a remaining portion of the sealing member 500 in tight contact with the front plate 420, a bonding area between the front plate 420 and the sealing member 500 may be secured relatively large. Accordingly, a sealing force between the sealing member 500 and the front plate 420 may be enhanced.

According to an embodiment, the sealing member 500 may be configured to seal a space between the side bezel structure 410 and the front plate 420. The sealing member 500 may be defined and/or referred to as a sealing structure, a waterproofing structure, a waterproofing member, a dustproof structure, or a dustproof member.

FIG. 13 is a plan view illustrating a plurality of core portions according to an embodiment of the disclosure.

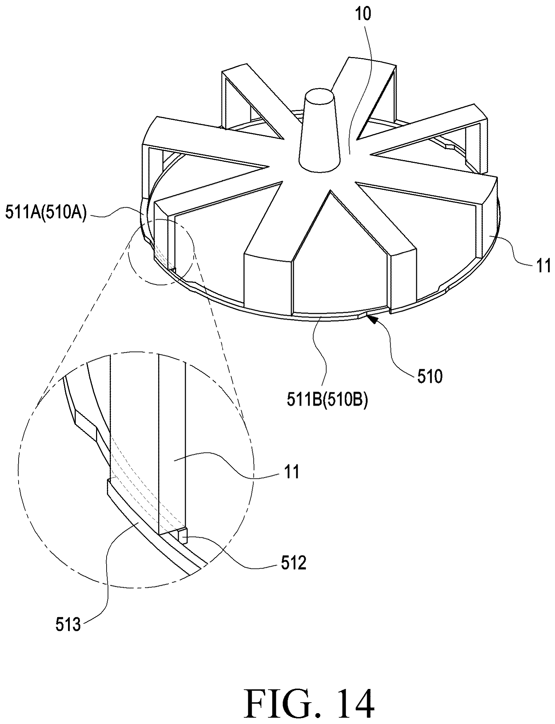

FIG. 14 is a perspective view illustrating a state in which a plurality of core portions are aligned by a bridge member according to an embodiment of the disclosure.

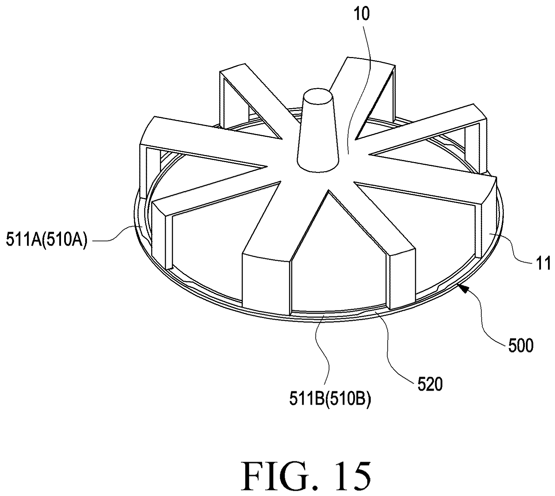

FIG. 15 is a perspective view illustrating a state in which an elastic portion is injected into a plurality of core portions according to an embodiment of the disclosure.

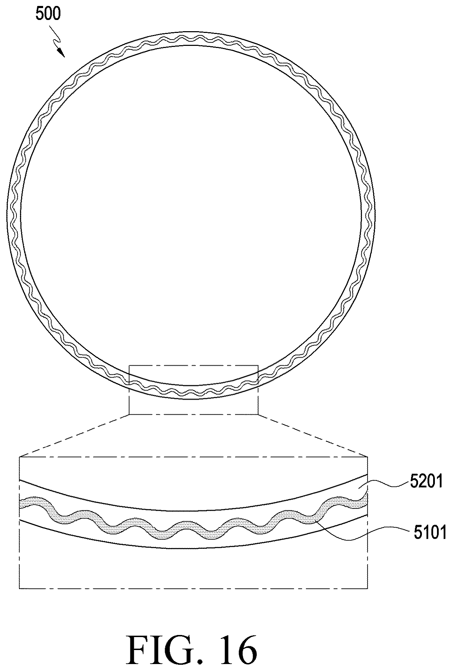

The embodiments of FIGS. 13 to 15 may be combinable with the embodiments of FIGS. 1 to 12, or the embodiments of FIGS. 16 to 20.

Referring to FIGS. 13 to 15, a sealing member (e.g., the sealing member 500 of FIG. 15) may include at least one core portion 510, a first core portion 510A, a second core portion 510B, a third core portion 510C, a fourth core portion 510D, a first base portion 511A, a second base portion 511B, a first wing portion 512, a second wing portion 513, or an elastic portion 520.

The configuration of the sealing member 500, at least one core portion 510, first core portion 510A, second core portion 510B, third core portion 510C, fourth core portion 510D, first base portion 511A, second base portion 511B, first wing portion 512, second wing portion 513, or elastic portion 520 of FIGS. 13 to 15 may be identical in whole or part to the configuration of the sealing member 500, at least one core portion 510, first core portion 510A, second core portion 510B, third core portion 510C, fourth core portion 510D, first base portion 511A, second base portion 511B, first wing portion 512, second wing portion 513, or elastic portion 520 of FIGS. 5 to 12.

A manufacturing method or manufacturing process of the sealing member 500 is described with reference to FIGS. 13 to 15.

Referring to FIG. 13, the plurality of core portions 510A, 510B, 510C, 510D may be disposed or aligned in a substantially ring shape.

Referring to FIG. 14, the plurality of core portions 510A, 510B, 510C, 510D may be fixed to a bridge member 10. For example, the bridge member 10 may include a plurality of legs 11, and the plurality of legs 11 may be coupled to the base portions 511A, 511B or the wing portions 512, 513.

According to an embodiment, the bridge member 10 may be configured to maintain aligned positions of the plurality of core portions 510A, 510B, 510C, 510D.

According to an embodiment, at least some of the plurality of legs 11 may be coupled to the wing portions 512, 513, and a remainder of the plurality of legs 11 may be coupled to the base portions 511A, 511B.

Referring to FIG. 15, in a state in which the plurality of core portions 510A, 510B, 510C, 510D are fixed to the bridge member 10, the elastic portion 520 may be coupled to the plurality of core portions 510A, 510B, 510C, 510D through an injection molding process (e.g., insert injection). By removing the bridge member 10 in a state in which the elastic portion 520 is injected, a ring-shaped sealing member 500 may be completed.

FIG. 16 is a plan view illustrating a sealing member according to an embodiment of the disclosure.

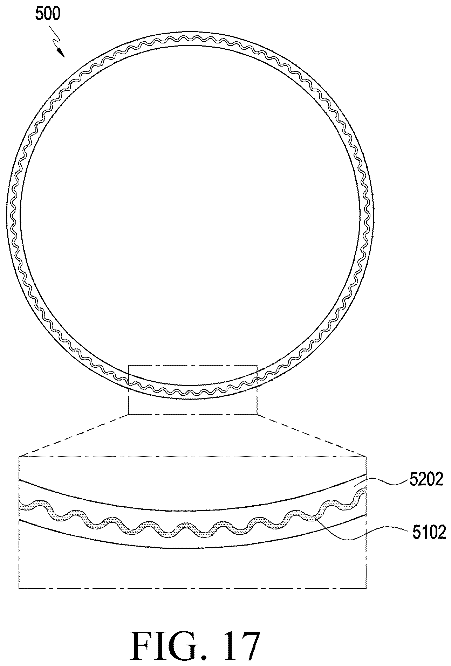

FIG. 17 is a plan view illustrating a sealing member according to an embodiment of the disclosure.

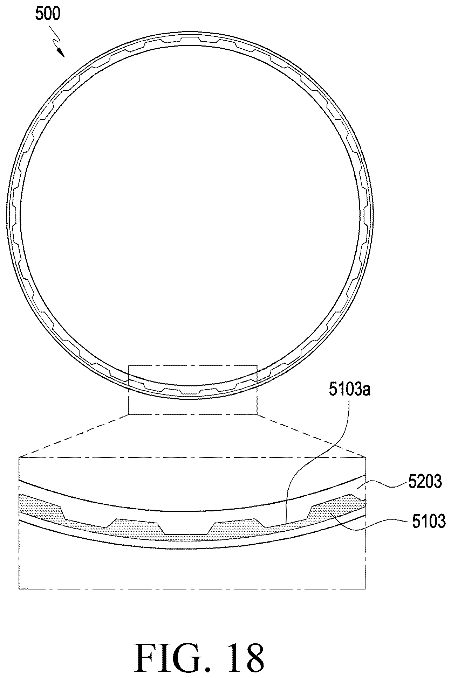

FIG. 18 is a plan view illustrating a sealing member according to an embodiment of the disclosure.

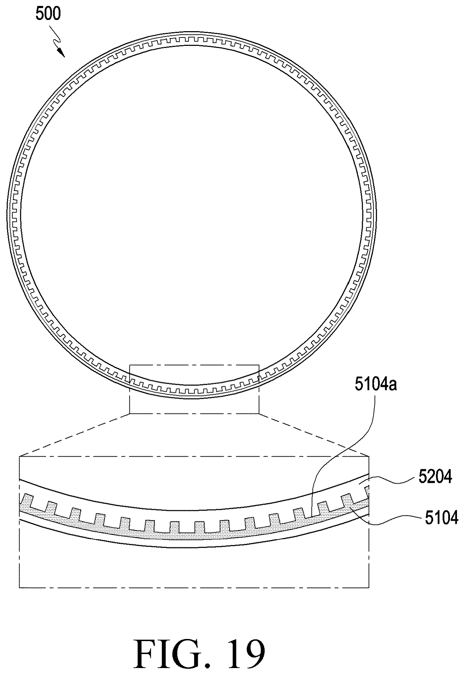

FIG. 19 is a plan view illustrating a sealing member according to an embodiment of the disclosure.

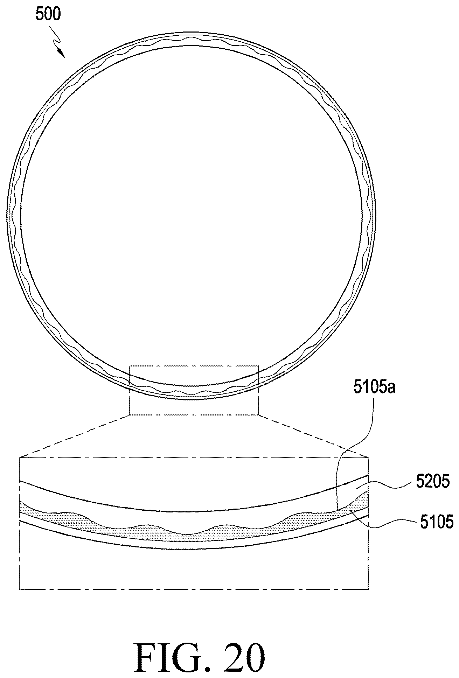

FIG. 20 is a plan view illustrating a sealing member according to an embodiment of the disclosure.

The embodiments of FIGS. 16 to 20 may be combinable with the embodiments of FIGS. 1 to 15.

Referring to FIGS. 16 to 20, a sealing member 500 (e.g., the sealing member 500 of FIGS. 6 to 15) may include at least one core portion 5101, 5102, 5103, 5104, 5105, or an elastic portion 5201, 5202, 5203, 5204, 5205 surrounding the at least one core portion 5101, 5102, 5103, 5104, 5105.

The configuration of the sealing member 500, at least one core portion 5101, 5102, 5103, 5104, 5105, or elastic portion 5201, 5202, 5203, 5204, 5205 of FIGS. 16 to 20 may be identical in whole or part to the configuration of the sealing member 500, at least one core portion 5101, 5102, 5103, 5104, 5105, or elastic portion 5201, 5202, 5203, 5204, 5205 of FIGS. 6 to 15.

Referring to FIGS. 16 to 20, the sealing member 500 may be inserted into a groove (e.g., the groove 414 of FIG. 10) of a side bezel structure (e.g., the side bezel structure 410 of FIG. 10 or 12) and may be configured to seal between the side bezel structure and a front plate (e.g., the front plate 420 of FIG. 12). According to an embodiment, the sealing member 500 may be configured to be at least partially bendable.

According to an embodiment, the at least one core portion 5101, 5102, 5103, 5104, 5105 of the sealing member 500 may be defined as forming a closed loop structure in the sealing member 500 by being at least partially positioned in all regions of the sealing member 500 along a circumferential direction of the sealing member 500. For example, the at least one core portion 5101, 5102, 5103, 5104, 5105 may at least partially be present in all portions of the sealing member 500 along the circumferential direction of the sealing member 500.

According to the illustrated embodiments, the at least one core portion 5101, 5102, 5103, 5104, 5105 may be provided as one core portion (single core portion). The at least one core portion 5101, 5102, 5103, 5104, 5105 is not limited to one core portion and may also be provided as a plurality of core portions.

According to an embodiment, the elastic portion 5201, 5202, 5203, 5204, 5205 may be disposed to surround or cover the at least one core portion 5101, 5102, 5103, 5104, 5105.

Referring to FIGS. 16 to 17, the at least one core portion 5101, 5102 may extend along a circumferential direction of the ring-shaped sealing member 500. For example, the at least one core portion 5101, 5102 may extend in a winding shape (or serpentine shape) or a zigzag shape along the circumferential direction of the sealing member 500.

According to an embodiment, the elastic portion 5201, 5202 may surround the at least one core portion 5101, 5102.

According to an embodiment, as the at least one core portion 5101, 5102 is provided in a winding shape, the sealing member 500 may be configured to be at least partially bendable.

Referring to FIGS. 16 to 17, configurations in which sizes of widths of the at least one core portion 5101, 5102 are variously provided in a width direction of the sealing member 500 (e.g., the r-axis direction of FIG. 12) are illustrated. For example, a size of a width of the at least one core portion 5101 of FIG. 16 may be smaller than a size of a width of the at least one core portion 5102 of FIG. 17. A ratio of a size of a width of the at least one core portion 5101, 5102 to a size of a width of the sealing member 500 may have various values.

Referring to FIGS. 18 to 19, the at least one core portion 5103, 5104, 5105 may extend along a circumferential direction of the ring-shaped sealing member 500.

According to an embodiment, the elastic portion 5203, 5204, 5205 may surround the at least one core portion 5103, 5104, 5105.

According to an embodiment, a plurality of depressed recesses 5103a, 5104a, 5105a may be formed in at least a portion of the at least one core portion 5103, 5104, 5105.

According to an embodiment, as the at least one core portion 5103, 5104, 5105 includes the plurality of recesses 5103a, 5104a, 5105a, the sealing member 500 may be configured to be at least partially bendable.

Referring to FIGS. 18 to 20, configurations in which shapes of the plurality of recesses 5103a, 5104a, 5105a are variously provided are illustrated. For example, the plurality of recesses 5103a of FIG. 18 may have a substantially trapezoidal shape (e.g., an isosceles trapezoidal shape). For example, the plurality of recesses 5104a of FIG. 19 may have a substantially rectangular shape. For example, the plurality of recesses 5105a of FIG. 20 may have a substantially curved shape. The shapes of the plurality of recesses 5103a, 5104a, 5105a are not limited to those illustrated and may be provided in semicircular, elliptical, or various polygonal shapes.

A wearable electronic device may include a housing, a display disposed inside the housing, and a cover window protecting the display. The cover window may be coupled to at least a portion of the housing through an adhesive member. The wearable electronic device may be provided with a waterproofing structure that blocks or reduces foreign objects or moisture from entering electrical components disposed inside the housing.

As the wearable electronic device is downsized and/or thinned, it may be difficult to sufficiently secure space for the adhesive member and the waterproofing structure.

For example, due to space occupied by the waterproofing structure, a bonding area of the adhesive member may not be sufficiently secured, so that when external impact is applied to the wearable electronic device, the cover window and the housing could be easily separated.

According to an embodiment of the disclosure, a waterproofing structure with enhanced bonding force between a housing and a front plate and an electronic device including the same may be provided.

The disclosure is not limited to the foregoing embodiments but various modifications or changes may rather be made thereto without departing from the spirit and scope of the disclosure.

According to an embodiment of the disclosure, a waterproofing structure with enhanced waterproof function and dustproof function between a housing and a front plate and an electronic device including the same may be provided.

Effects obtainable from the disclosure are not limited to the above-mentioned effects, and other effects not mentioned may be apparent to one of ordinary skill in the art from the following description.

According to an embodiment of the disclosure, a wearable electronic device 101 may include a housing 401, 410, a display 430, a front plate 420, or a sealing member 500. The display may be disposed in the housing. The front plate may cover the display. The sealing member may be disposed between the housing and the front plate. The sealing member may include a first core portion 510A, a second core portion 510B, or an elastic portion 520. The elastic portion may surround the first core portion and the second core portion. The elastic portion may be configured to be at least partially elastically deformable. At least a portion of the first core portion may overlap at least a portion of the second core portion in a first direction from an inner surface 523 of the sealing member toward an outer surface 521 of the sealing member.

According to an embodiment, the sealing member may have a ring shape. The first core portion and the second core portion may extend along a circumferential direction of the sealing member.

According to an embodiment, the first core portion may include a first base portion 511A or a first wing portion 512. The first wing portion may extend from the first base portion toward the second core portion. The second core portion may include a second base portion 511B or a second wing portion 513. The second wing portion may extend from the second base portion toward the first core portion. The second wing portion may overlap the first wing portion in the first direction.

According to an embodiment, in the first direction, a width of the first base portion may be larger than a width of the first wing portion. In the first direction, a width of the second base portion may be larger than a width of the second wing portion.

According to an embodiment, the width of the first base portion may be substantially equal to the width of the second base portion.

According to an embodiment, in the first direction, the first base portion may not overlap the second base portion.

According to an embodiment, the width of the first base portion may be greater than a sum of the width of the first wing portion and the width of the second wing portion.

According to an embodiment, at least a portion 522 of the elastic portion may be positioned between the first wing portion and the second wing portion.

According to an embodiment, the sealing member may have a ring shape. The first direction may be substantially the same as a radial direction of the sealing member.

According to an embodiment, the housing may include a groove 414. The groove may be formed in an inner surface of the housing facing the front plate. The sealing member may be inserted into the groove.

According to an embodiment, the wearable electronic device may further include an adhesive member 600. The adhesive member may be configured to adhere the housing and the front plate. The adhesive member may overlap the sealing member in a second direction perpendicular to the first direction.

According to an embodiment, the adhesive member may not overlap the sealing member in the first direction.

According to an embodiment, the front plate may further include an edge portion 421. The edge portion may protrude from at least a portion of the front plate. The adhesive member may be seated on the edge portion. The adhesive member may be disposed along the edge portion.

According to an embodiment, a height of the outer surface of the sealing member may be smaller than a height of the inner surface of the sealing member.

According to an embodiment, the outer surface of the sealing member may contact at least a portion of the housing. The inner surface of the sealing member may contact at least a portion of the front plate.

According to an embodiment of the disclosure, a wearable electronic device 101 may include a housing 401, 410, a display 430, a front plate 420, a sealing member 500, or an adhesive member 600. The display may be disposed in the housing. The front plate may cover the display. The sealing member may be disposed between the housing and the front plate. The sealing member may include at least one core portion 510 or an elastic portion 520. The elastic portion may surround the at least one core portion. The elastic portion may be configured to be at least partially elastically deformable. The adhesive member 600 may be configured to adhere the housing and the front plate. The adhesive member may overlap the sealing member in a direction from the display toward the front plate.

According to an embodiment, the at least one core portion 510 may include a plurality of core portions 510A, 510B, 510C, 510D. The plurality of core portions may be sequentially disposed along a circumferential direction of the sealing member.

According to an embodiment, the at least one core portion 5101, 5102 may extend in a zigzag shape along a circumferential direction of the sealing member.

According to an embodiment, a plurality of recesses 5103a, 5104a, 5105a may be formed in at least a portion of the at least one core portion 5103, 5104, 5105.

According to an embodiment of the disclosure, a wearable electronic device 101 may include a housing 401, 410, a display 430, a front plate 420, or a sealing member 500. The display may be disposed within the housing. The front plate may cover the display. The sealing member may be disposed between the housing and the front plate. The sealing member may include a first core portion 510A, a second core portion 510B, or an elastic portion 520. The elastic portion may surround the first core portion and the second core portion. The elastic portion may be configured to be at least partially elastically deformable. The sealing member may include one surface (e.g., the inner surface 523 of the sealing member 500 of FIG. 7A, or the upper surface 525 of the sealing member 500 of FIG. 8) or another surface (e.g., the outer surface 521 of the sealing member 500 of FIG. 7A, or the lower surface 526 of the sealing member 500 of FIG. 8). The another surface of the sealing member may face a direction opposite to the one surface of the sealing member. At least a portion of the first core portion (e.g., the first wing portion 512 of FIG. 7A, or the first wing portion 5121 of FIG. 8) may overlap at least a portion of the second core portion (e.g., the second wing portion 513 of FIG. 7A, or the second wing portion 5131 of FIG. 8) in a direction from the one surface of the sealing member toward the another surface of the sealing member.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. A wearable electronic device (101) comprising:
a housing (401, 410);
a display (430) disposed in the housing;
a front plate (420) covering the display; and
a sealing member (500) disposed between the housing and the front plate and including a first core portion (510A), a second core portion (510B) and an elastic portion (520) surrounding the first core portion and the second core portion, wherein the elastic portion is configured to be at least partially elastically deformable;
wherein at least a portion of the first core portion overlaps with at least a portion of the second core portion in a first direction from an inner surface (523) of the sealing member toward an outer surface (521) of the sealing member.

2. The wearable electronic device of claim 1, wherein the sealing member has a ring shape, and
wherein the first core portion and the second core portion extend along a circumferential direction of the sealing member.

3. The wearable electronic device of any one of claims 1 to 2, wherein the first core portion includes a first base portion (511A) and a first wing portion (512) extending from the first base portion toward the second core portion, and
wherein the second core portion includes a second base portion (511B) and a second wing portion (513) extending from the second base portion toward the second core portion and overlapping with the first wing portion in the first direction.

4. The wearable electronic device of any one of claims 1 to 3, wherein in the first direction, a width of the first base portion is larger than a width of the first wing portion, and
wherein in the first direction, a width of the second base portion is larger than a width of the second wing portion.

5. The wearable electronic device of any one of claims 1 to 4, wherein the width of the first base portion is substantially equal to the width of the second base portion.

6. The wearable electronic device of any one of claims 1 to 5, wherein in the first direction, the first base portion does not overlap with the second base portion.

7. The wearable electronic device of any one of claims 1 to 6, wherein the width of the first base portion is greater than a sum of the width of the first wing portion and the width of the second wing portion.

8. The wearable electronic device of any one of claims 1 to 6, wherein at least a portion (522) of the elastic portion is located between the first wing portion and the second wing portion.

9. The wearable electronic device of any one of claims 1 to 7, wherein the sealing member has a ring shape, and
wherein the first direction is substantially equal to a radial direction of the sealing member.

10. The wearable electronic device of any one of claims 1 to 8, wherein the housing includes a groove (414) formed in an inner surface of the housing facing the front plate, and
wherein the sealing member is inserted into the groove.

11. The wearable electronic device of any one of claims 1 to 10, further comprising:
an adhesive member (600) configured to adhere the housing and the front plate, the adhesive member overlapping the sealing member in a second direction perpendicular to the first direction.

12. The wearable electronic device of any one of claims 1 to 11, wherein the adhesive member does not overlap with the sealing member in the first direction.

13. The wearable electronic device of any one of claims 1 to 12, wherein the front plate further includes an edge portion (421) protruding from at least a portion of the front plate, and
wherein the adhesive member is seated on the edge portion and is disposed along the edge portion.

14. The wearable electronic device of any one of claims 1 to 13, wherein a height of the outer surface of the sealing member is smaller than a height of the inner surface of the sealing member.

15. The wearable electronic device of any one of claims 1 to 14, wherein the outer surface of the sealing member contacts at least a portion of the housing, and
wherein the inner surface of the sealing member contacts at least a portion of the front plate.
